# EUROPEAN PATENT SPECIFICATION

(11) **EP 1 460 735 B1**
(45) Date of publication and mention of the grant of the patent: **16.11.2005**
(21) Application number: 04006232.5
(22) Date of filing: 16.03.2004
(51) Int. Cl.: H01S 3/00

(54) **Laser unit**
Lasereinheit
Unité laser

(30) Priority: 18.03.2003 JP 2003073823
(43) Date of publication of application: 22.09.2004
(73) Proprietor: FANUC LTD, Minamitsuru-gun, Yamanashi 401-0597 (JP)
(72) Inventor: Sakano, Tetsuro, Kawasaki-shi Kanagawa 215-0001 (JP); Nishikawa, Yuji c/o FANUC Manshonharimomi, Minamitsuru-gun Yamanashi 401-0511 (JP); Yoshida, Hiroyuki c/o FANUC Manshonharimomi, Minamitsuru-gun Yamanashi 401-0511 (JP); Machida, Hisatada c/o FANUC Dai3virakaramatsu, Minamitsuru-gun Yamanashi 401-0511 (JP); Nishio, Akihiko c/o FANUC Dai3virakaramatsu, Minamitsuru-gun Yamanashi 401-0511 (JP)
(74) Representative: Schmidt, Steffen J.

(56) References cited:
- US-B1- 6 302 565
- US-B1- 6 407 873
- US-B1- 6 493 364
- PATENT ABSTRACTS OF JAPAN vol. 016, no. 200 (E-1201), 13 May 1992 (1992-05-13) -& JP 04 030485 A (TOPCON CORP), 3 February 1992 (1992-02-03)
- PATENT ABSTRACTS OF JAPAN vol. 2000, no. 02, 29 February 2000 (2000-02-29) -& JP 11 312831 A (NEC CORP), 9 November 1999 (1999-11-09)

## Description

### BACKGROUND OF THE INVENTION

### 1. Field of the Invention

The present invention relates to a laser unit and, in particular, to a device for detecting a position of a laser beam shutter of the laser unit.

### 2. Description of the Related Art

A laser unit has a laser beam shutter for controlling activation or stoppage of the irradiation of a laser beam produced by a laser and also for controlling the direction of progress of the laser beam. This laser beam shutter controls the activation or stoppage, and the direction of progress, of the laser beam, by using a damper to adsorb the laser beam or a reflective member to change the direction of progress of the laser beam. The shutter is positioned removably in an optical path of the laser beam produced by the laser.

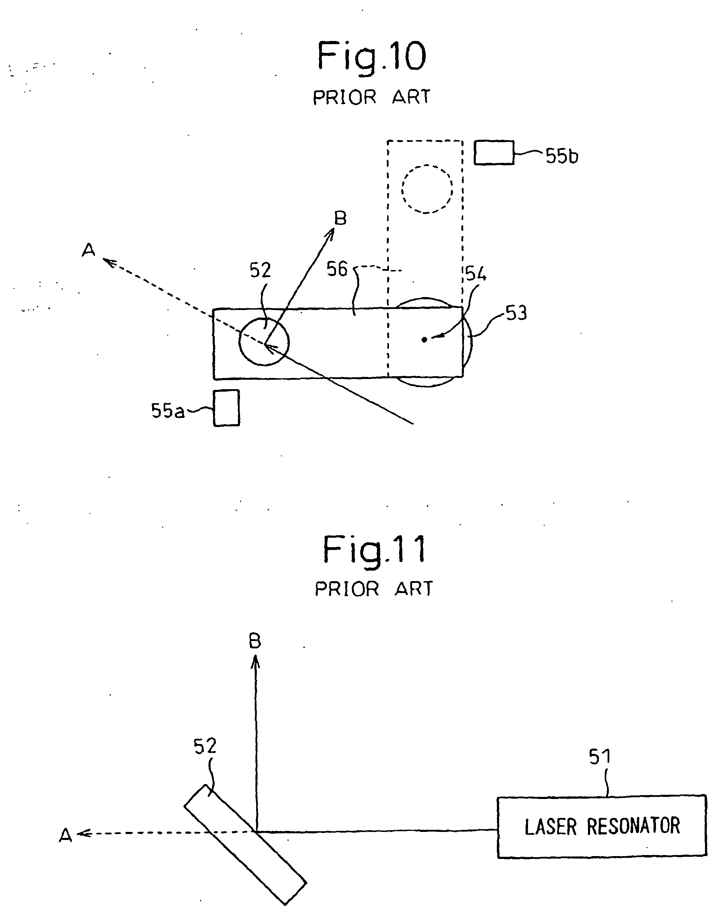

Fig. 10 is a schematic view for explaining an example of an arrangement of a laser beam shutter of a prior art. A shutter 56 is fixed to a rotating shaft 54 of a solenoid motor 53, and is rotated about the shaft 54 by driving the solenoid motor 53. A reflective mirror 52 for reflecting a laser beam is fixed on the shutter 56.

In Fig. 10, a broken line indicates the shutter 56 rotated to a point where the reflective mirror 52 does not reflect the laser beam. The angle of rotation of the shutter of this example is 90 degree.

The shutter 56 can be located in two positions alternately by rotating of the shaft 54 driven by the solenoid motor 53, so as to control the activation or stoppage, and the direction of progress of the laser beam. As the position of the shutter 56 must be detected in order to prevent irregular irradiation of the laser beam, for security, one or more proximity switches for detecting the position of the shutter may be provided.

Referring to Fig. 10, two proximity switches 55a, 55b are arranged at two rotational positions of the shutter 56 to detect the shutter. Each of the proximity switches 55a, 55b detects the shutter 56 adjacent to the each of the switches. Therefore, from the detecting results of the switches, the position of the shutter 56 (i.e., in the Fig. 10, the position of the shutter 56 is a position indicated by a solid line, a position indicated by a broken line or an intermediate position between them) can be determined.

Fig. 11 is a schematic view for explaining a state in which the direction of progress of the laser beam can be selected. As shown in Fig. 11, the laser beam is reflected by the reflective mirror 52 and progresses in a direction B indicated by a solid line when the mirror 52 is located in an optical path of the laser beam irradiated by a laser or a laser resonator 51. On the other hand, the laser beam progresses in a direction A indicated by a broken line when the mirror 52 is not located in the optical path of the laser beam. The directions of progress A and B are also indicated by a broken line and a solid line, respectively, in Fig. 10. These directions of progress A, B and an incidence direction into the reflective mirror 52 of the laser beam are indicated schematically for convenience.

Thus, the direction of progress of the laser beam can be selected by using the laser beam shutter.

An embodiment using detection of a reflective mirror of a laser beam shutter is disclosed in Japanese Utility Model Publication (Kokoku) No. 7-20933. In the embodiment, a position of the laser beam shutter is detected by two limit switches, and the laser beam is electrically prevented from irradiating when the shutter for intercepting the laser beam is being moved between a position where a part intercepts the laser beam and a position where a part does not intercept the laser beam. Therefore, it is prevented that an irradiating mechanism for visible rays, arranged with the shutter, is damaged by the laser beam.

Also, in another embodiment disclosed in Japanese Patent Publication (Kokai) No. 11-312831, a laser beam, scattered by an optical system for guiding the laser beam outside of a laser unit, is detected, as well as the position of a shutter, and detection of the scattered beam may be used to control the laser beam.

As shown in Japanese Utility Model Publication (Kokoku) No. 7-20933, in an arrangement in which the limit switches or separated sensors are provided as detecting devices for detecting the position of the shutter, the separated sensors may malfunction. For example, a contact switch such as the limit switch has a contact which may deteriorate by being actuated repeatedly. An electromagnetic switch may malfunction by a foreign objects or debris. Also, a photoelectric switch may malfunction due to unexpected stray light from external environment.

If a malfunction occurs, for example, a high-output laser for cutting or welding may be irradiated outside of the laser unit, and the irradiated laser may not only damage a workpiece but also induce a fire or injure an operator seriously.

On the other hand, the above Japanese Patent Publication (Kokai) No. 11-312831 discloses a device for detecting the laser beam itself in order to prevent the mulfunction of the separated sensor for detecting the position of the shutter. However, this device requires more sensors, and control of the laser beam is complicated.

US Patent Publication US6493364 discloses a laser unit comprising a shutter having a reflective member for reflecting a laser beam, a motor for moving the shutter between a position in an optical path of the laser beam and a position out of the optical path and a shutter position control for commanding the motor.

### SUMMARY OF THE INVENTION

It is an object of the present invention to resolve above-mentioned problem, in the prior art, and to provide a reliable laser unit having a simple structure.

In accordance with the present invention, by monitoring a condition of a shutter based on a rotational condition of a motor for driving a shutter, it is unnecessary to provide a separate sensor for detecting the position of the shutter or a detecting device for detecting a laser beam which may be malfunction, and the number of necessary sensors may be decreased.

According to the invention, there is provided a laser unit comprising a shutter having a reflective member for reflecting a laser beam, a motor for moving the shutter between a position in an optical path of the laser beam and a position out of the optical path, and a shutter position control for commanding the motor, wherein the laser unit comprises an encoder for detecting a rotational condition of the motor, the shutter position control receives position data of the shutter by detecting a signal from the encoder and commands the motor based on the position data.

The encoder may be a rotary encoder built into the motor or attached to the outside of the motor. On the other hand, the encoder may be a linear encoder. Also, the encoder may be built in a rotation shaft of the motor or a driving element of a coupling mechanism transmitting a driving force of the motor.

The encoder may be an absolute encoder outputting an absolute position or an incremental encoder outputting a distance of movement from a reference position. An absolute position of the shutter or a relative position of the shutter from a motion-starting position of the shutter may be detected by an output signal from the encoder.

The shutter according to the invention has a function to intercept the laser beam intended to progress out of the laser unit, and/or a function to change the direction of progress of the laser beam inside of the laser unit. In the former case, the shutter alternately switches irradiating the laser beam outside of the laser unit and absorbing the laser inside the laser beam by moving the shutter. In the latter case, the shutter changes the direction of progress of the laser beam inside the laser unit by moving of the shutter.

The shutter position control of the invention controls at least one of a rotational position, a rotational speed and a torque on the motor in order to control a shutter position.

As a first aspect, for enhancing safety of the laser beam, the laser unit of the invention comprises a judging device for judging whether the shutter is operated according to a command from the shutter position control or not, and the judging device can limit at least one of a power supply of the motor and a power supply for laser excitation when the judging device judges the shutter not to be operated according to the command.

In accordance with the first aspect, if it is judged that the shutter position does not coincide with a commanded position, the irradiation of the laser beam is stopped by switching off a power supply of the motor and/or a power supply for laser excitation.

As a second aspect for enhancing safety of the laser beam, the laser unit of the invention comprises a moving device for forcibly moving the shutter to a safely waiting position where the laser beam is intercepted by the shutter and is prevented going out of the laser unit when the motor does not provide a certain driving force or a driving mechanism of the shutter is disordered. The moving device may include a spring mechanism for moving the shutter to the safely waiting position.

In accordance with the second aspect, if the driving force of the motor is less than a certain value or the driving mechanism of the shutter is disordered, the irradiation of the laser beam is stopped by moving the shutter to the safely waiting position using the moving device. For example, the moving device may include a spring mechanism having a spring for moving the shutter to the safely waiting position, and a force generated by the spring is arranged to correspond to a certain level of driving force required for the motor. Thus, the moving device can move the shutter to the safely waiting position by the spring force when the driving force of the motor is below the spring force.

The moving device may also be moved based on a result of comparison between a value of driving current provided to the motor and a certain reference value.

### BRIEF DESCRIPTION OF THE DRAWING

The above and other objects, features and advantages of the present invention will be made more apparent from the following description of the preferred embodiments thereof with reverence to the accompanying drawings, wherein:
Fig. 1 is a block diagram for explaining a basic constitution of the invention;
Fig. 2a and 2b are schematic views for explaining a first embodiment of the invention;
Fig. 3 is a schematic view for explaining a second embodiment of the invention;
Fig. 4 is a schematic view for explaining a third embodiment of the invention;
Fig. 5 is a schematic view for explaining another example of the third embodiment of the invention;
Fig. 6 is a schematic view for explaining a fourth embodiment of the invention;
Fig. 7a - 7c are schematic views for explaining switching a laser beam in the fourth embodiment of the invention;
Fig. 8 is a schematic view for explaining a fifth embodiment of the invention;
Fig. 9a and 9b are schematic views for explaining a motion of the fifth embodiment of the invention;
Fig. 10 is a schematic view for explaining an example of an arrangement of a laser beam shutter of the prior art; and
Fig. 11 is a schematic view for explaining a state in which the direction of progress of a laser beam is selected by the laser beam shutter of the prior art.

### DETAILED DESCRIPTION

In the following, embodiments of the invention will be described with reference to the drawings. In addition, the same arrangements or the same parts, as described before, have identical reference numerals and the descriptions are omitted.

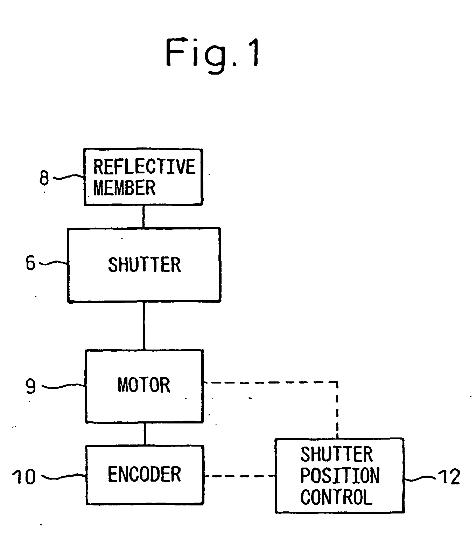

Fig. 1 is a block diagram of a main part of a laser unit of the present invention. The laser unit includes a shutter 6 having a reflective member 8 for reflecting a laser beam, a motor 9 for moving the shutter 6 between a position in an optical path of the laser beam and a position out of the optical path, and a shutter position control 12 for commanding the motor 9, wherein the laser unit comprises an encoder 10 for detecting a rotational condition of the motor 9, the shutter position control 12 receives position data of the shutter 6 by a detecting signal from the encoder 10 and commands the motor 9 based on the position data.

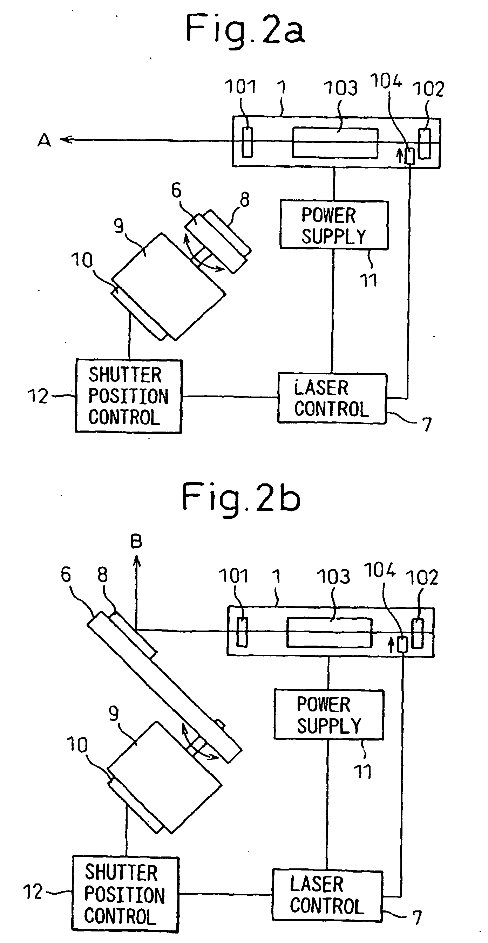

Fig. 2a shows a first embodiment of the laser unit. The laser unit has an arrangement for generating a laser beam, and a laser beam control device for intercepting and changing a direction of progress of the laser beam.

The arrangement for generating the laser beam may include a laser or a laser resonator 1, a power supply 11 for supplying a power to the laser 1, and a laser control 7 for controlling the laser 1.

The laser 1 has at least two reflective mirrors 101 and 102 facing to each other, and a laser-exciting device 103 positioned between the two mirrors. The laser exciting device 103 is supplied a power by the power supply 11. A laser beam excited by the laser-exciting device 103 is reflected repeatedly between the two mirrors 101, 102 and then is irradiated by the laser 1. The power supplied from the power supply 11 is controlled by the laser control 7. In addition, an explanation of a construction and an operation of the laser 1 is omitted, because these are same as those of a conventional resonator.

The laser beam control device includes a shutter 6, a reflective member 8 attached to the shutter 6 to reflect the laser beam, a motor 9 to move the shutter 6 between a first position in an optical path of the laser beam and a second position out of the optical path, an encoder 10 detecting a rotational condition of the motor 9 and a shutter position control 12 to command the motor 9.

The reflective member 8 is positioned on the shutter 6 such that the reflective member reflects the laser beam in a pre-determined direction when the reflective member is moved into the optical path of the laser beam. The direction of the laser beam is determined by an incidence angle of the laser beam against the reflective member 8, and the incidence angle is set by a configuration of the reflective member and/or an installation angle of the reflective member 8 onto the shutter 6.

In case of that the reflective member 8 for reflecting the laser beam is used for a YAG laser oscillator, the reflective member may be, for example, a high-reflective mirror of a transparent material, such as quartz, onto which a dielectric material is evaporated. Also, the reflective member may be a highly-reflective material, such as gold or silver, directly evaporated onto the shutter.

The motor 9 drives the shutter 6 as a whole to move the reflective member 8 between the first position in the optical path of the laser beam and the second position out of the optical path. The encoder 10, such as a rotary encoder, is loaded on the motor 9. Detection data from the encoder 10 is transmitted to the shutter position control 12, whereby the driving speed and the position of the shutter 6 can be controlled. The encoder 10 may be an absolute encoder outputting an absolute position or an incremental encoder outputting a distance of movement from a reference position. The shutter position control 12 may receive the data of the position of the shutter based on a signal from the encoder 10 in relation to a rotational condition of the motor 9.

The encoder 10 may be built into the motor 9, may be attached to the outside of the motor 9 or may be arranged on a driving mechanism (not shown) positioned between a drive shaft of the motor 9 and the shutter 6. Further, the encoder may be a linear encoder instead of the rotary encoder. If the encoder is the linear encoder, the data of the distance of movement of the shutter may be provided by positioning the linear encoder along with a trace of movement of the shutter 6.

The laser control 7 may function as a judging device which can detect whether the shutter 6 is at a commanded position or not, by receiving position data from the shutter position control 12 and comparing the position data with the commanded position. The command of the position is given by a control unit of a machine tool or a processing machine (not shown).

Next, each of components of the laser unit of the invention will be described.

As shown in Fig. 2a, the laser 1 has at least two reflective mirrors 101 and 102 facing to each other, and the laser exciting device 103 positioned between the two mirrors. The laser exciting device 103 includes at least one laser medium such as an Nd:YAG crystal. The laser exciting device 103 further includes a device for activating a laser medium such as an arc lamp, or a semiconductor laser, if the laser exciting device is an optical exciting device.

Although the shutter 6 is positioned outside of the mirrors 101 and 102 in this embodiment, the shutter may be positioned between the two mirrors. In the latter case, if the shutter 6 is positioned in the optical path, the laser oscillation is not generated and the laser beam is not irradiated outside.

If the shutter 6 is positioned outside of the two mirrors, as shown in fig. 2a and 2b, the direction of progress of the laser beam can be selected by the shutter 6. For example, if the reflective member 8 is positioned outside of the optical path of the laser beam as shown in Fig. 2a, the laser beam irradiated from the laser 1 goes straight in a direction A. On the other hand, if the reflective member 8 is positioned in the optical path of the laser beam as shown in Fig. 2b, the laser beam is reflected by the reflective member 8 and progresses in a different direction B.

The motor 9 may be a servomotor or a stepping motor, and may have a structure including a gear, a ball screw, a link, a belt and a chain as the above driving mechanism, in order to rotate the shutter 6. The shutter position control 12 controls a position, a speed and a torque of the motor 9, and positions the shutter 6 and the reflective member 8.

The encoder 10 detects the rotation of the motor shaft. The encoder 10 can detect the rotary position of the shaft by, for example, irradiating a light toward a slit formed on a disk attached to the shaft and by sensing a reflected or transmitted light of the irradiated light. The encoder 10 may be an absolute encoder outputting an absolute position or an incremental encoder outputting a relative position in relation to a motion-starting position. In the latter case, by providing a function to calculate the position relative in the shutter position control 12 or a separate counter (not shown) or the like, the shutter position may be stored. Therefore, the shutter position may be given as a quantitative data by using either type of the encoder.

The quantitative data of the shutter position given by the encoder is sent of the laser control 7 and is used for controlling the laser oscillator. The laser control 7 judges whether the shutter position is at a commanded position, or not, by, for example, comparing the commanded position with the position data given by the encoder. If the shutter position is not at the commanded position, the laser control 7 sends a control signal to the power supply 11 to control the action of the laser-exciting device 103 and to limit an excitation of the laser. The power supply 11 is a power supply supplying a power to the laser-exciting device 103 to generate a laser oscillation.

The laser control 7 can also control inserting a shielding member 104 such as a metal having low reflectivity between the reflective member 101 and 102 so as to stop the excitation of the laser by the laser 1. Further, the laser control 7 can control sending a control signal to the motor 9 via the shutter position control 12 to move the shutter to the commanded position, and/or to indicate and correct the difference between the shutter position and the commanded position.

By the above construction, the direction of the laser beam can be controlled by positioning the shutter having the reflective member in or out of the light path of the laser beam.

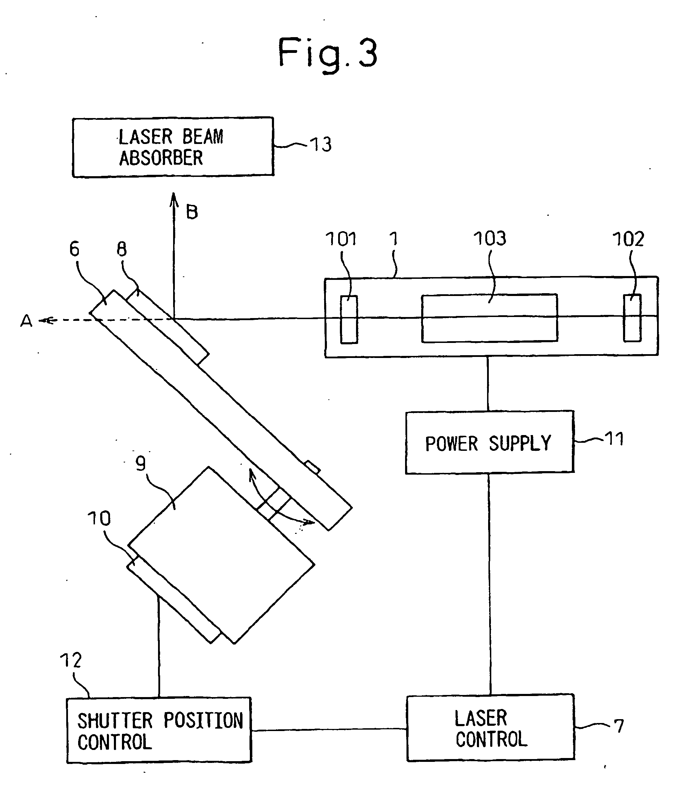

Next, a second embodiment of a laser unit of the invention will be described with reference to Fig. 3. The second embodiment has an arrangement for intercepting the laser beam, and has an arrangement for controlling irradiation from the laser unit to the outside of the unit and stoppage of the irradiation.

The second embodiment of the laser unit has a member absorbing the laser beam in one optical path of the laser beam selected by the shutter in the first embodiment.

As shown in Fig. 3, a laser absorber 13, such as a metal having high thermal conductivity coated with a material having high light absorptance, is arranged in a path of the laser beam reflected by the reflective member 8 located on the shutter 6. The other construction of this embodiment may be similar to that of the first embodiment. When the reflective member 8 on the shutter 6 is moved in an optical path of the irradiated laser beam, the laser beam is reflected by the reflective member 8 and progresses in a direction B indicated a solid line in the Fig. 3, and is absorbed by the laser absorber 13. Thus, the laser beam is prevented from being irradiated outside of the laser unit.

On the other hand, when the reflective member 8 on the shutter 6 is moved out of the optical path of the irradiated laser beam, the laser beam progresses in a direction A indicated a broken line in the Fig. 3, and is irradiated outside of the laser unit.

Conversely, the position of the laser absorber 13 may be positioned such that the laser beam reflected by the reflective member is irradiated outside of the laser unit and the laser beam which has not been reflected is absorbed by the laser absorber.

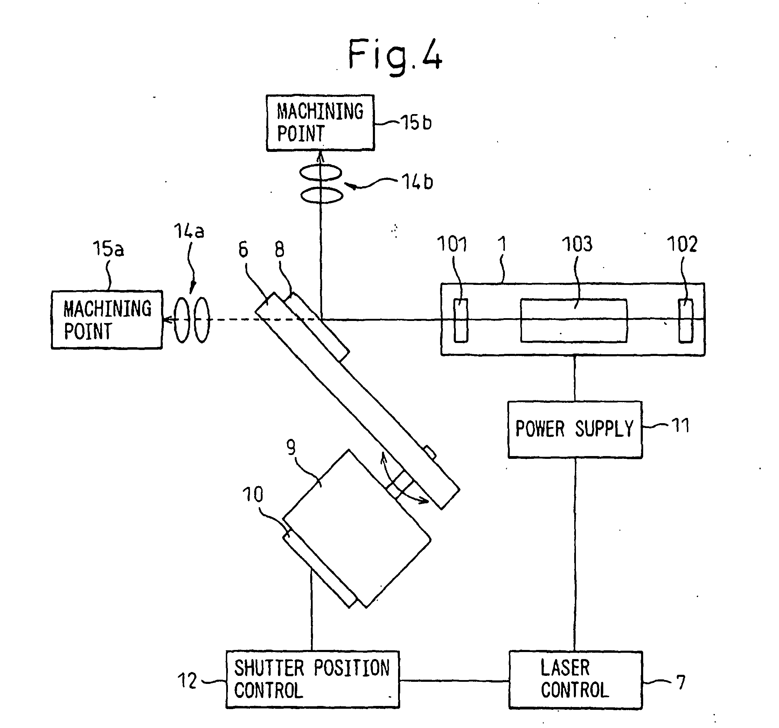

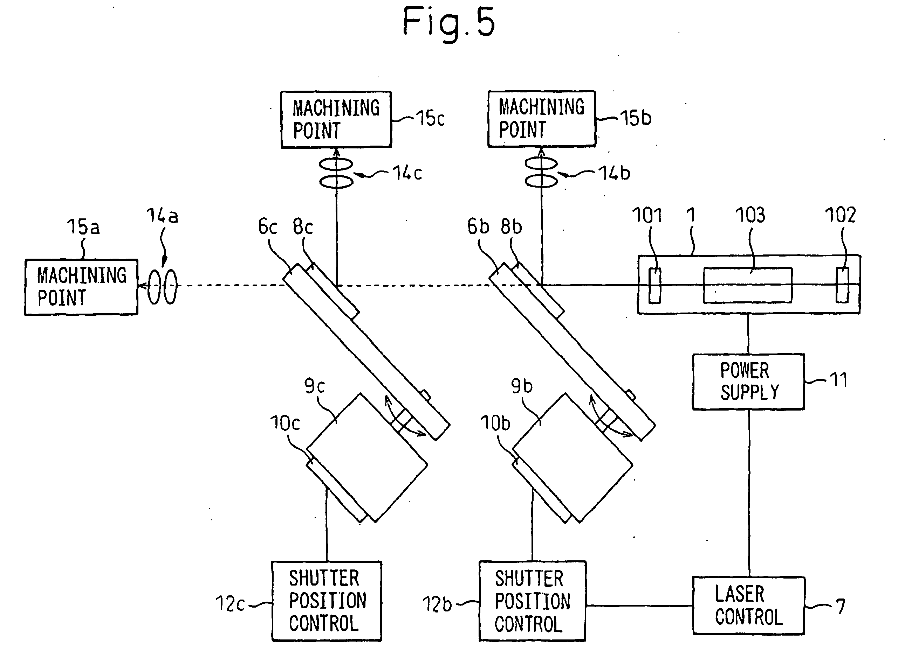

Next, a third embodiment of a laser unit of the invention will be described with reference to Fig. 4 and 5. The third embodiment has an arrangement for switching optical paths of the laser beam, and this arrangement can be used, for example, to send the laser beam to a plurality of machining points alternatively at a certain time distribution.

In the third embodiment of the laser unit, a plurality of machining points are arranged, each of which is positioned in each of paths of the laser beam selected by the shutter similar to that of the first embodiment, and the laser beam can reach one of the machining points and can process the point by selecting the path of the laser beam using the shutter.

As shown in Fig. 4, a focusing lens 14a is located in a path of the laser beam from the laser 1, and a focal position of the lens 14a is determined as a machining point 15a. Also, a focusing lens 14b is located in a path of the laser beam reflected by the reflective member 8 on the shutter 6, and a focal position of the lens 14b is determined as a machining point 15b. The other constructions of this embodiment may be similar to that of the first or the second embodiments.

when the reflective member 8 on the shutter 6 is moved in the path of the laser beam, the laser beam is reflected by the reflective member 8 and then is focused into the machining point 15b through the focusing lens 14b to process the point 15b. On the other hand, when the reflective member 8 on the shutter 6 is moved out of the path of the laser beam, the laser beam is focused into the machining point 15a through the focusing lens 14a to process the point 15a.

Further, if the machining points 15a and 15b should be processed alternatively at a certain time distribution, a command to switch the shutter position according to a type of the process of each of the machining points is transmitted to the motor 9 from the shutter position control 12.

Thus, the switching of the laser beam from the laser unit toward each of the machining points can be controlled.

Although the direction of progress of the laser beam is changed by 90 degree by the shutter in the above embodiments, the direction may also be changed by an arbitrary angle other than 90 degree. The changed angle of the laser beam can be determined by a reflective direction of the reflective member arranged on the shutter.

Further, it can be possible that a plurality of machining points are processed by locating a plurality of shutters side by side in the path of the laser beam. An example shown in Fig. 5 uses two shutters such that three machining points may be exposed and processed selectively by the laser beam. The irradiation of the laser beam to a machining point 15b is selected by a shutter 6b, and the irradiation of the laser beam to a machining point 15a or 15c is selected by a shutter 6c. A motor 9b driving a shutter 6b is controlled by a shutter position control 12b, and a motor 9c driving a shutter 6c is controlled by a shutter position control 12c. The laser control 7 controls the shutter position controls 12b and 12c such that the laser beam is directed to one of the machining points 15a, 15b and 15c.

Although the two shutters are used in the example of Fig. 5, a number of machining points may be increased by increasing a number of positioned shutters.

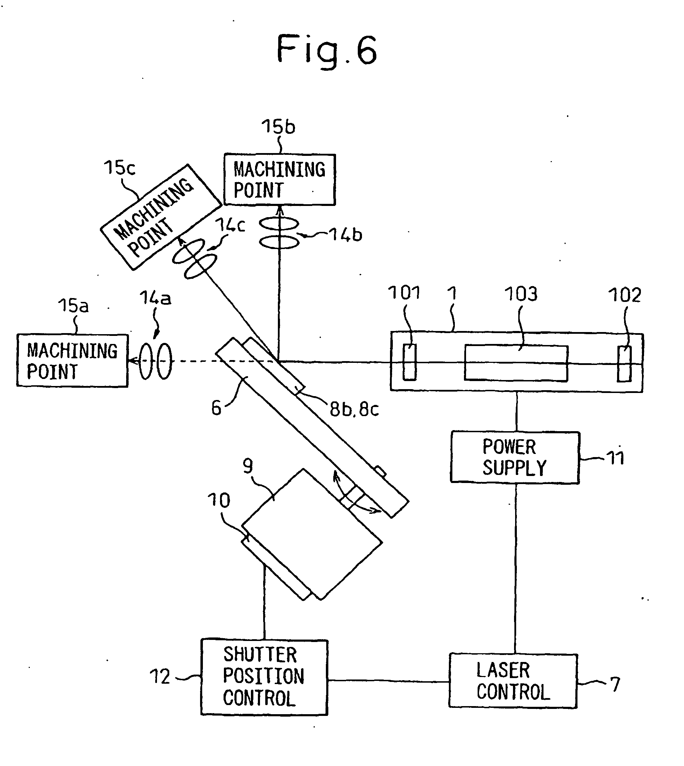

Next, a fourth embodiment of a laser unit of the invention will be described with reference to Fig. 6 - 7c. Similarly to the third embodiment, the fourth embodiment has an arrangement for switching optical paths of the laser beam, and this arrangement can be used, for example, to send the laser beam to a plurality of machining points alternatively at a certain time distribution.

In the fourth embodiment, a plurality of machining points can be processed by the laser beam, by enabling one shutter to select more than one directions of progress of the laser beam. In this embodiment, the shutter 6 can alternatively select a plurality of progressing paths of the laser beam each of which is directed to each of machining points, thus the laser beam can reach selected machining point and can process the point.

Fig. 6 shows a construction of one example of the fourth embodiment. In the fourth embodiment, two reflective members 8b and 8c are positioned on the shutter 6. Each of the two reflective members 8b and 8c determines a reflective angle of the laser beam such that the laser beam reflected by one of the reflective members can reach a machining point 15b or 15c.

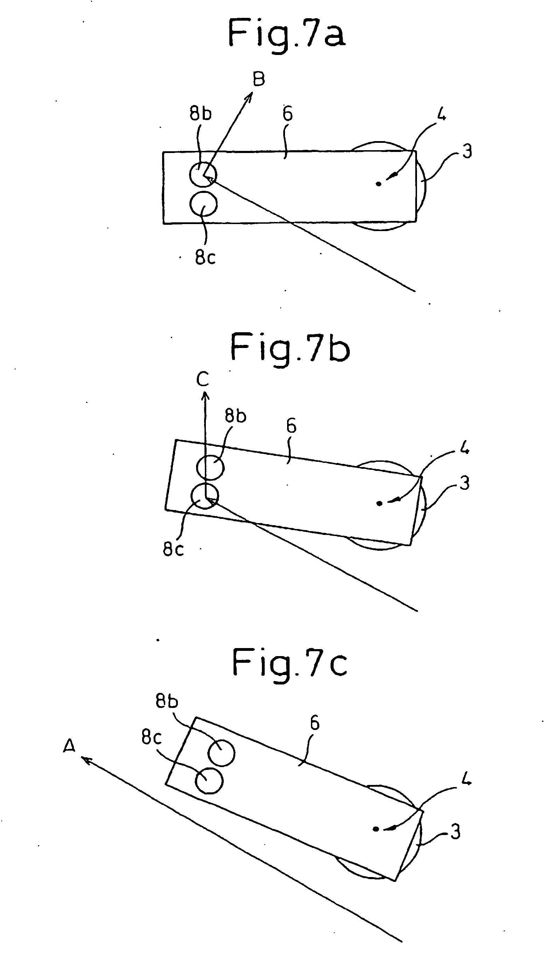

Fig. 7a - 7c illustrate switching of the laser beam by the shutter. Referring to Fig. 7a, the shutter 6 is moved to a first rotary position where the laser beam from the laser 1 is reflected by a reflective member 8b into a direction B. Similarly, referring to Fig. 7b, the shutter 6 is moved to a second rotary position where the laser beam from the laser 1 is reflected by a reflective member 8c into a direction C. Further, referring to Fig. 7c, the shutter 6 is moved to a third rotary position where the laser beam from the laser 1 is not reflected and goes straight in a direction A. The directions of progress and reflect of the laser beam shown in Figs. 7a - 7c are indicated solely for convenience, therefore, these directions may not precisely represent the paths of the laser beam.

In this way, machining points 15a, 15b and 15c positioned in the directions A, B and C, respectively, may be processed selectively by switching the direction of progress of the laser beam, as shown in Fig. 6.

A fifth embodiment of a laser unit of the invention has a construction enabling the shutter to move to a safely waiting position. In this embodiment, the shutter is moved to the safely waiting position such that the laser beam is progressed in a safe direction when it is difficult to control the position of the shutter by, for example, decreasing of a driving force of the motor or a disorder of a driving mechanism of the shutter.

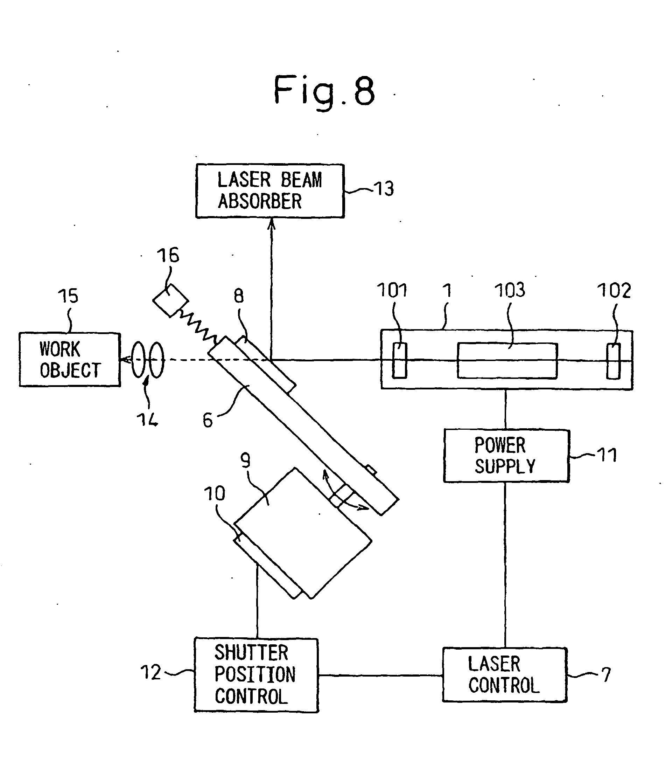

Fig. 8 is a drawing for explaining the fifth embodiment. As shown, a moving device or mechanism 16 is arranged to move the shutter 6 to a safely waiting position. When the shutter 6 is moved to the safely waiting position by the mechanism 16, the laser beam directed to a work object 15 is reflected by the shutter 6 toward a laser absorber 13 such that the laser beam is prevented going out of the laser unit accidentally. The mechanism 16 may include, for example, a tension spring or a torsion spring available for always applying a certain value of force to the shutter.

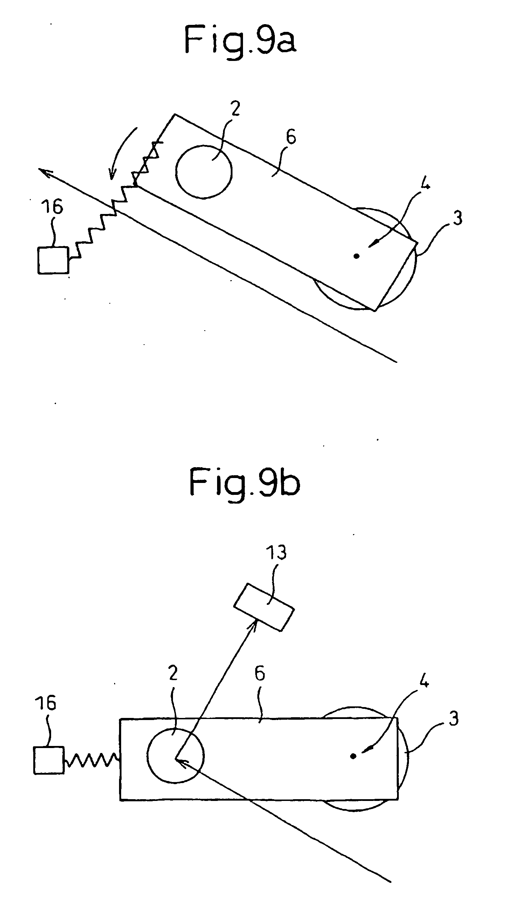

Fig. 9a and 9b illustrate an operation of this embodiment. As shown Fig. 9a, if a motor for driving the shutter 6 cannot provide sufficient driving force for controlling the position of the shutter, the shutter 6 may be forcibly moved to the safely waiting position by the mechanism 16, as shown in Fig. 9b.

It is possible to move the shutter to the safely waiting position when the motor cannot provide the sufficient driving force by, for example, setting relation between a torque applied to the shutter by a spring of the mechanism 16 and a torque of the motor for driving the shutter. As an example, by setting the strength of the spring such that the torque applied to the shutter by a force generated by the spring is equal to or lower than a threshold value of torque at which the motor is determined as it is out of order, the shutter is moved to the safely waiting position by a force generated by the spring if the torque of the motor is decreased to lower than the torque applied to the shutter by the spring.

Alternatively, the mechanism 16 may include a latch mechanism. By monitoring a value of current provided to the motor, the mechanism 16 can move the shutter to the safely waiting position by releasing the latch when the current value is lower than a threshold value at which the torque for driving the shutter is reduced inconveniently.

As described above, according to the invention, by associating the encoder with the motor of the shutter, it is unnecessary to provide a separate sensor for detecting the position of the shutter or a detecting device for detecting the laser beam. Thus, a reliable laser unit having a simple structure may be provided.

While the invention has been described with reference to specific embodiments chosen for the purpose of illustration, it should be apparent that numerous modifications could be made thereto, by one skilled in the art, without departing from the basic concept and scope of the invention, as defined by the appended claims.

## Claims

1. A laser unit comprising a shutter (6) having a reflective member (8) for reflecting a laser beam, a motor (9) for moving the shutter between a position in an optical path of the laser beam and a position out of the optical path, and a shutter position control (12) for commanding the motor,
wherein the laser unit comprises an encoder (10) for detecting a rotational position of the motor, the shutter position control receives position data of the shutter by detecting a signal from the encoder and commands the motor based on the position data.

2. A laser unit as set forth in claim 1, wherein the shutter intercepts the laser beam intended to progress out of the laser unit.

3. A laser unit as set forth in claim 1, wherein the shutter changes the direction of progress of the laser beam inside of the laser unit.

4. A laser unit as set forth in claim 1, wherein the laser unit comprises a judging device for judging whether the shutter is operated according to a command from the shutter position control or not, the judging device limits a power supply for laser excitation when the judging device judges the shutter to be not operated according to the command.

5. A laser unit as set forth in claim 1, wherein the laser unit comprises a moving device for forcibly moving the shutter to a safely waiting position, where the laser beam is intercepted by the shutter and is prevented going out of the laser unit, when the motor does not provide a certain driving force or a driving mechanism of the shutter is disordered.

6. A laser unit as set forth in claim 5, wherein the moving device comprises a spring mechanism for moving the shutter to the safely waiting position.

## Patentansprüche

1. Lasereinheit, umfassend einen Verschluss (6) mit einem reflektierenden Element (8) zum Reflektieren eines Laserstrahls, einen Motor (9) zum Bewegen des Verschlusses zwischen einer Position in einem optischen Pfad des Laserstrahls und einer Position ausserhalb des optischen Pfads und eine Verschlusspositionssteuerung (12) zum Ansteuern des Motors, wobei die Lasereinheit einen Messaufnehmer (10) zum Detektieren einer Drehposition des Motors umfasst, die Verschlusspositionssteuerung Positionsdaten des Verschlusses durch Detektieren eines Signals von dem Messaufnehmer empfängt und den Motor auf der Grundlage der Positionsdaten ansteuert.

2. Lasereinheit nach Anspruch 1, wobei der Verschluss den Laserstrahl abfängt, der vorgesehen ist, sich aus der Lasereinheit heraus auszubreiten.

3. Lasereinheit nach Anspruch 1, wobei der Verschluss die Ausbreitungsrichtung des Laserstrahls innerhalb der Lasereinheit ändert.

4. Lasereinheit nach Anspruch 1, wobei die Lasereinheit eine Bewertungsvorrichtung umfasst, um zu bewerten, ob der Verschluss gemäß einer Ansteuerung von der Verschlusspositionssteuerung betrieben wird oder nicht, wobei die Bewertungsvorrichtung eine Stromversorgung zur Laseranregung beschränkt, wenn die Bewertungsvorrichtung bewertet, dass die Blende nicht gemäß der Anweisung betrieben wird.

5. Lasereinheit nach Anspruch 1, wobei die Lasereinheit eine Bewegungsvorrichtung zum zwingenden Bewegen des Verschlusses in eine sichere Warteposition umfasst, in welcher der Laserstrahl durch den Verschluss abgefangen und daran gehindert wird, die Lasereinheit zu verlassen, wenn der Motor nicht eine bestimmte Antriebskraft bereitstellt oder ein Antriebsmechanismus des Verschlusses gestört ist.

6. Lasereinheit nach Anspruch 5, wobei die Bewegungsvorrichtung einen Federmechanismus zum Bewegen des Verschlusses in die sichere Warteposition umfasst.

## Revendications

1. Unité laser comprenant un obturateur (6) possédant un élément réflecteur (8) pour réfléchir un faisceau laser, un moteur électrique (9) pour déplacer l'obturateur entre une position dans un chemin optique du faisceau laser et une position à l'extérieur de ce chemin optique, et une commande de position de l'obturateur (12) pour commander le moteur électrique,
dans laquelle l'unité laser comprend un encodeur (10) pour détecter une position de rotation du moteur électrique, la commande de position de l'obturateur reçoit des données de position de l'obturateur en détectant un signal provenant de l'encodeur et commande le moteur électrique sur la base de ces données de position.

2. Unité laser selon la revendication 1,
dans laquelle l'obturateur intercepte le faisceau laser destiné à progresser jusqu'à l'extérieur de l'unité laser.

3. Unité laser selon la revendication 1,
dans laquelle l'obturateur change la direction de progression du faisceau laser à l'intérieur de l'unité laser.

4. Unité laser selon la revendication 1,
dans laquelle l'unité laser comprend un dispositif d'évaluation pour évaluer si l'obturateur est actionné en fonction d'une commande provenant de la commande de position de l'obturateur ou non, le dispositif d'évaluation limite une alimentation électrique pour l'excitation du laser lorsque le dispositif d'évaluation évalue que l'obturateur n'est pas actionné en fonction de la commande.

5. Unité laser selon la revendication 1,
dans laquelle l'unité laser comprend un dispositif de déplacement pour déplacer de force l'obturateur jusqu'à une position d'attente sure, dans laquelle le faisceau laser est intercepté par l'obturateur et est empêché de sortir de l'unité laser, lorsque le moteur électrique ne fournit pas une force d'entraînement donnée ou un mécanisme d'entraînement de l'obturateur est désordonné.

6. Unité laser selon la revendication 5,
dans laquelle le dispositif de déplacement comprend un mécanisme de ressort pour déplacer l'obturateur jusqu'à la position d'attente sure.
